# EUROPÄISCHE PATENTSCHRIFT

(11) **EP 3 436 651 B1**
(45) Veröffentlichungstag und Bekanntmachung des Hinweises auf die Patenterteilung: **29.01.2020**
(21) Anmeldenummer: 17715125.5
(22) Anmeldetag: 31.03.2017
(51) Int. Cl.: E04H 12/08, F03D 13/20

(54) **TRAGSTRUKTUR FÜR EINE WINDENERGIEANLAGE**
SUPPORT STRUCTURE FOR A WIND TURBINE
STRUCTURE PORTANTE POUR ÉOLIENNE

(30) Priorität: 01.04.2016 DE 102016205447
(43) Veröffentlichungstag der Anmeldung: 06.02.2019
(73) Patentinhaber: innogy SE, 45128 Essen (DE)
(72) Erfinder: BARTMINN, Daniel, 25335 Elmshorn (DE); CZARNECKI, Artur, 22301 Hamburg (DE); MATLOCK, Benjamin, 20259 Hamburg (DE)
(74) Vertreter: Richly & Ritschel Patentanwälte PartG mbB
(86) Internationale Anmeldenummer: PCT/EP2017/057755
(87) Internationale Veröffentlichungsnummer: WO 2017/167990

(56) Entgegenhaltungen:
- EP-A1- 3 070 205
- DE-A1-102013 107 059
- GB-A- 396 745
- US-A1- 2014 000 180

## Beschreibung

Die Erfindung betrifft eine Tragstruktur nach einem der unabhängigen Ansprüche 1 und 4. Aus dem Stand der Technik ist es bekannt, Trag- bzw. Unterstrukturen der eingangs genannten Art beispielsweise als Gründungspfähle, Übergangsstücke oder als Element des Turms einer Windenergieanlage zu verwenden, insbesondere für den Offshore-Einsatz. Die Trag- bzw. Unterstrukturen dienen dazu, einerseits eine zuverlässige Verankerung der Windenergieanlage im (Meeres-)Boden zur gewährleisten und andererseits das Maschinenhaus und den Rotor zu tragen.

Zum Stand der Technik gehört das Dokument DE 10 2013 107 059 A1, aus dem eine Tragstruktur mit den Merkmalen des Oberbegriffs der unabhängigen Ansprüche 1 und 4 bekannt ist.

Die vorbekannten Tragstrukturen werden aus sogenannten Rohrschüssen zusammengebaut. Jeder Rohrschuss wird wiederum aus einem oder mehreren Blechen hergestellt, die entsprechend der Form des herzustellenden Segments derart gebogen werden, dass die sich im gebogenen Zustand gegenüberstehenden Blechkanten bzw. Fügeflächen miteinander verschweißt werden können.

Die Verschweißung der sich gegenüberstehenden Blechkanten erfolgt üblicherweise mittels einer Längsschweißnaht, die beispielsweise als beidseitige Stumpfnaht gemäß EN ISO 2553, Tabelle 2, mittels Unterpulverschweißen ausgeführt sein kann. Dabei werden die gegenüberstehenden Blechkanten beispielsweise angeschärft, um im nachfolgenden Schweißprozess eine durchgeschweißte, beidseitige Stumpfnaht zu realisieren, so dass eine Verbindung der gegenüberstehenden Blechkanten über der gesamten Wanddicke des Rohrschusses erfolgt. Sowohl das Vorbereiten der gegenüberstehenden Blechkanten als auch das Herstellen einer durchgeschweißten, beidseitigen Stumpfnaht sind zeit- und kostenintensiv.

Die Tragstruktur wird anschließend aus einer Vielzahl von entsprechend gebildeten Rohrschüssen zusammengebaut, indem aneinandergrenzende Rohrschüsse mittels jeweils einer Rundschweißnaht, insbesondere einer durchgeschweißten Doppel-V-Naht, stirnseitig so verbunden werden, dass die jeweiligen Längsachsen der Rohrschüsse kollinear zueinander verlaufen.

Zur Herstellung einer entsprechenden Tragstruktur sind folglich viele Schweißnähte mit einer großen Gesamtlänge notwendig, wodurch sich die Herstellung der Tragstruktur aufwendig und kostenintensiv gestaltet. So sind z.B. zur Herstellung und Verbindung zweier Segmente, die jeweils eine Höhe von drei Metern und einen Durchmesser von sieben Metern aufweisen, Schweißnähte mit einer Gesamtlänge von ca. 28 m notwendig, nämlich 2^{∗}3 m Längsschweißnaht zur Verbindung der sich gegenüberstehenden Seitenkanten bzw. Materialkanten der einzelnen Rohrschüsse und ca. 22 m Rundschweißnaht zur stirnseitigen Verbindung der zwei Segmente.

Der vorliegenden Erfindung liegt die Aufgabe zugrunde, eine Tragstruktur bereitzustellen, die in verkürzter Zeit herstellbar und die folglich kostengünstiger ist.

Die der vorliegenden Erfindung zugrundeliegende Aufgabe wird durch eine Tragstruktur mit den Merkmalen der unabhängigen Ansprüche 1 und 4 gelöst. Vorteilhafte Ausführungsformen sind in den abhängigen Ansprüchen beschrieben. Gegenstand dieser Offenbarung ist eine Tragstruktur, insbesondere für eine Windenergieanlage, mit zumindest zwei Segmenten, die derart miteinander verbunden sind, dass deren Längsachsen im Wesentlichen kollinear zueinander verlaufen, wobei wenigstens eines der Segmente ein Rohrschuss ist, der wenigstens zwei einander zugewandte, zumindest abschnittsweise miteinander verbundene Fügeflächen hat. Nach einem ersten Aspekt weist die Verbindung der Fügeflächen wenigstens eine Schweißverbindung auf, wobei die Dicke der Schweißverbindung zumindest abschnittsweise geringer ist als die Wanddicke des Rohrschusses. Alternativ oder ergänzend zum ersten Aspekt weist die Verbindung der Fügeflächen gemäß einem zweiten Aspekt wenigstens eine Halteklammer auf.

Beide Segmente können als Rohrschuss ausgeführt sein. Das Tragelement kann aus einer Vielzahl von Segmenten zusammengesetzt sein.

Die Verbindung der Fügeflächen dient dazu, den Rohrschuss vor und/oder nach der stirnseitigen Verbindung mit dem Segment in Form zu halten. Die Verbindung kann dabei dergestalt sein, dass sie temporär und damit insbesondere nach einem stirnseitigen Verbinden von Rohrschuss und Segment entfernbar bzw. lösbar ausgestaltet sein kann.

Das Vorsehen einer Schweißverbindung, insbesondere einer Schweißnaht, deren Dicke zumindest abschnittsweise geringer ist als die Wanddicke des Rohrschusses, bietet den Vorteil, dass im Vergleich zu Lösungen, die ein Durchschweißen über die volle Wanddicke fordern, die Prozesszeit und der Wärmeeintrag in das Bauteil verringert werden können. Überraschend hat sich gezeigt, dass bereits ein Verbinden der Fügeflächen in Teilbereichen ausreichend ist, um den Rohrschuss im Produktionsprozess zuverlässig in Form zu halten.

Die Dicke der Schweißverbindung, insbesondere einer Schweißnaht, ist dabei die Erstreckung der Schweißverbindung entlang der Wanddicke des Rohrschusses. Mit anderen Worten werden sowohl die Wanddicke des Rohrschusses als auch die Dicke der Schweißverbindung in einem Schnitt quer zur Längsachse, insbesondere orthogonal zu einer inneren und/oder äußeren Mantelfläche des Rohrschusses, gemessen. Die Wanddicke des Rohrschusses entspricht der Dicke des abgewickelten Blechs, aus dem der Rohrschuss durch Umformen hergestellt worden ist.

Die Schweißverbindung kann folglich eine Heftnaht sein, die eine Vorfixierung des Rohrschusses für nachfolgende Handhabungs- und Verbindungsvorgänge darstellt. Nachdem der Rohrschuss stirnseitig mit einem weiteren Segment verbunden worden ist, kann die Heftnaht entfernt werden oder am Bauteil verbleiben.

Die Schweißverbindung kann sich über eine Teillänge, zwei oder mehr Längenabschnitte oder die gesamte Länge des Rohrschusses erstrecken. Die Länge des Rohrschusses wird dabei parallel zur Längsachse gemessen. Insbesondere können eine Mehrzahl separater Punktschweißungen oder eine oder mehrere Längsschweißnähte im Bereich einer Teillänge, eines Längenabschnitts oder entlang der gesamten Länge des Rohrschusses vorgesehen sein.

Die in einem Schnitt quer zur Längsachse gemessene Dicke d1 der Schweißverbindung, beispielsweise der Schweißraupe einer Schweißnaht, kann kleiner oder gleich 1/2, bevorzugt kleiner oder gleich 1/10, weiter bevorzugt kleiner oder gleich 1/20 der Wanddicke d2 des Rohrschusses sein, und demnach eine der Vorschriften d1 ≤ 0,5^{∗}d2, bevorzugt d1 ≤ 0,1^{∗}d2, weiter bevorzugt d1 ≤ 0,05^{∗}d2 erfüllen. So kann die Wanddicke des Rohrschusses beispielsweise 100 mm betragen, während die Dicke der Schweißverbindung, beispielsweise der Schweißraupe einer Schweißnaht, lediglich 5 mm oder weniger beträgt. Bei der Dicke d1 kann es sich vorliegend beispielsweise um die Nahtdicke s gemäß EN ISO 2553, Tabelle 5, handeln.

Alternativ oder ergänzend können die Fügeflächen gemäß einem zweiten Aspekt der Erfindung über wenigstens eine Halteklammer miteinander verbunden sein. Dabei kann es sich um ein Zwischenstück handeln, das stoffschlüssig oder lösbar im Bereich der Fügeflächen befestigt sein kann, um die Fügeflächen miteinander zu verbinden. Die Halteklammer dient dazu, den Rohrschuss für Handhabungs- und Verbindungsvorgänge und ggf. im fertig montierten Zustand in der gewünschten Form zu halten. Nachdem der Rohrschuss stirnseitig mit einem weiteren Segment verbunden worden ist, kann die Halteklammer entfernt werden oder am Bauteil verbleiben.

Die Halteklammer bietet den Vorteil, dass auf eine durchgehende Längsschweißnaht im Bereich der Fügeflächen verzichtet werden kann und dennoch die Formstabilität des Rohrschusses gewährleistet wird. So können die einander zugewandten Fügeflächen beispielsweise einen Abstand von einem Meter zueinander aufweisen, wobei dieser Abstand mit Hilfe der Halteklammer überbrückt wird, um eine Verbindung zwischen den Fügeflächen herzustellen. Es versteht sich, dass zwei oder mehr Halteklammern zwischen den Fügeflächen vorgesehen sein können.

Die Halteklammer kann durch eine Schweiß-, Schraub-, Bolzen-Niet- oder Magnetverbindungen im Bereich einer jeweiligen Fügefläche befestigt sein. Die Schweißverbindung kann dabei beispielsweise in voranstehend beschriebener Weise derart ausgeführt sein, dass kein Durchschweißen erfolgt, sondern die Schweißung lediglich einen Teilbereich der Dicke und/oder Länge der einander zugewandten, zu verbindenden Bauteilabschnitte ausmacht.

Gemäß einer Weiterbildung der Erfindung kann die Halteklammer zweiseitig von den Fügeflächen eingefasst sein und/oder bündig zu der äußeren und/oder inneren Mantelfläche des Rohrschusses abschließen. Auf diese Weise kann die Halteklammer in die Wandungsgeometrie des Rohrschusses eingebunden werden, ohne die äußeren Abmessungen des Bauteils bzw. den erforderlichen Bauraum des Rohrschusses im fertig montierten Zustand zu vergrößern.

Um möglichst wenig Zugspannungen in angrenzende bzw. benachbart vorgesehene Schweißnähte einzuleiten, kann die Halteklammer wenigstens eine konkave Ausrundung aufweisen, wobei die Ausrundung insbesondere im Wesentlichen sprungfrei in die Fügeflächen übergehen kann. Die Ausrundung kann als Durchführung für Kabel, Leitungen, Rohre oder anderer Halte- und/oder Anschlusselemente genutzt werden und somit als Durchgangsöffnung von der Umgebung hin zum Inneren des Rohrschusses dienen und umgekehrt.

Alternativ oder ergänzend kann die Halteklammer eine im Wesentlichen bikonkave Form aufweisen. Ein solche bikonkave Form zeichnet sich insbesondere durch zwei voneinander abgewandte Ausrundungen aus, die bevorzugt jeweils im Wesentlichen sprungfrei in die gegenüberliegenden Fügeflächen übergehen können. Auf diese Weise kann eine jeweils unter einem Abstand zu den beiden Stirnseiten eines Rohrschusses angeordnete Halteklammer zweiseitig die Übertragung von Zugspannungen in angrenzende bzw. benachbarte Schweißnähte reduzieren. Eine bikonkave Halteklammer kann daher insbesondere zur Risshemmung oder Rissbegrenzung zwischen zwei benachbart angeordneten Schweißnähten dienen. Ein sich ausbreitender Riss einer Schweißnaht kann somit im Bereich der Halteklammer unterbrochen bzw. zum Stillstand gebracht werden, ohne dass über die Halteklammer hinweg eine Rissfortpflanzung in angrenzende Schweißnähte stattfindet.

Gemäß einer vorteilhaften Ausgestaltung der Tragstruktur ist in wenigstens einem Übergangsbereich zwischen wenigstens einer der Fügeflächen und einer Stirnfläche des Rohrschusses eine Aussparung, insbesondere eine Ausrundung, vorgesehen. Die Aussparung kann nach Art eines Kreis- oder Ellipsenabschnitts geformt sein. Durch die Aussparung kann eine ggf. im Bereich der Fügeflächen vorgesehene Längsschweißnaht entlastet werden, da durch die Aussparung ein Abstand zwischen der Längsschweißnaht und einer stirnseitigen Rundschweißnaht gebildet wird, so dass die Längsnaht und die Rundschweißnaht nicht unmittelbar ineinander übergehen. Zudem können die Schweißnähte im Bereich der Aussparung entlang ihrer Dickenerstreckung stirnseitig einer mechanischen Nachbearbeitung unterzogen werden, insbesondere durch Kaltumformung oder Warmumformung, insbesondere Schmieden.

Gemäß einer Weiterbildung können in der Tragstruktur wenigstens zwei, insbesondere vier, Aussparungen vorgesehen sein, wobei die Aussparungen insbesondere einander gegenüberliegend einer Stirnfläche zugeordnet sind. Demnach kann beispielsweise ein Rohrschuss zwei einander paarweise gegenüberliegend angeordnete Aussparungen aufweisen, die einer Stirnfläche dieses Rohrschusses zugeordnet sind. Die beiden Aussparungen können in einem Längsschnitt jeweils nach Art eines Viertelkreises geformt sein, wobei sich die einander gegenüberliegend angeordneten Aussparungen insbesondere zu einem Halbkreis ergänzen können. In gleicher Weise können die einander gegenüberliegend angeordneten Aussparungen im Längsschnitt eine Ellipsenhälfte bilden. Auf diese Weise kann eine gleichmäßige Belastung und Zugentlastung einer im Bereich der Fügeflächen vorgesehenen Schweißverbindung erreicht werden.

Alternativ oder ergänzend können in der Tragstruktur wenigstens zwei, insbesondere vier, Aussparungen vorgesehen sein, wobei die Aussparungen insbesondere einander abgewandt und entgegengesetzten Stirnflächen zugeordnet sind. So können jeweils an beiden Stirnflächen eines Rohrschusses Aussparungen vorgesehen sein, um eine gegebenenfalls vorgesehene Längsnaht zu entlasten.

Nach einer weiteren Ausgestaltung der Tragstruktur ist wenigstens eine Aussparung zumindest abschnittsweise, insbesondere vollständig, von einer Stirnfläche eines benachbarten Segments überspannt. Die Aussparung wird daher in axialer Richtung durch die Stirnseite des benachbarten Segments begrenzt. Im Bereich der Aussparung findet bevorzugt kein radiales Verschweißen des Rohrschusses zu dem benachbarten Segment statt, sodass eine Rundschweißnaht an dieser Stelle unterbrochen ist. Mithilfe der Aussparung kann somit die umfangsseitige Schweißnahtlänge reduziert werden.

Neben einer Entlastung benachbarter oder angrenzender Schweißnähte kann eine im Bereich der Rohrwandung vorgesehene Aussparung beispielsweise als Kabeldurchführung dienen. Um eine möglichst große Durchgangsöffnung in einer Tragstruktur vorzusehen, kann wenigstens eine Aussparung zumindest abschnittsweise in eine Aussparung eines benachbarten Segments übergehen. Die Aussparung des Rohrschusses und die Aussparung des benachbarten Segments, das ebenfalls ein Rohrschuss sein kann, können folglich so angeordnet werden, dass sie in axialer Richtung ineinander übergehen und sich beispielsweise zu einer im Längsschnitt im Wesentlichen kreisförmigen oder elliptischen Durchgangsöffnung ergänzen.

Um im Bereich der einander zugewandten Stirnflächen zweier Segmente möglichst viel Schweißnahtlänge umfangsseitig einzusparen zu können, sind nach einer weiteren alternativ oder ergänzend vorgeschlagenen Ausgestaltung wenigstens zwei Aussparungen zweier benachbarter Segmente umfangsseitig unter einem Winkelversatz zueinander angeordnet, insbesondere derart, dass keine Überlappung der Aussparungen in axialer Richtung gegeben ist und die Aussparung des einen von der zugeordneten Stirnseite des jeweils anderen Segments begrenzt bzw. überspannt wird.

Die Schweißverbindung kann zur Steigerung ihrer Festigkeit einer mechanischen Nachbearbeitung unterzogen worden sein. Entsprechend einer vorteilhaften Weiterbildung weist die Schweißverbindung in einem Dickenquerschnitt Druckeigenspannungen auf, wobei die Druckeigenspannungen insbesondere durch Kaltverformen und/oder Schmieden erzeugt worden sind. Das Einbringen von Druckeigenspannungen in die Schweißnaht reduziert die Anfälligkeit gegen Rissbildungen bei Zugbelastung. Wenn vorliegend von einem Dickenquerschnitt der Schweißverbindung, insbesondere einer Schweißnaht, gesprochen wird, ist damit ein Schnitt quer, insbesondere orthogonal, zur Längsachse der Tragstruktur gemeint. Die Druckeigenspannungen im Bereich der Schweißnaht sind in bekannter Weise nachweisbar und können beispielsweise durch die Bestimmung der Oberflächenhärte der Naht abgeschätzt werden.
Alternativ oder ergänzend kann die Schweißverbindung durch Aufbohren entlastet worden sein. So kann die Schweißnaht Bohrungen oder Ausnehmungen umfassen, die gezielt in Bereichen angeordnet sind, die anfällig für Rissbildungen aufgrund von Zugeigenspannungen sind. Beispielsweise können vorliegend die Übergangsbereiche zwischen einer Längsnaht und einer angrenzenden Rundnaht durch eine Kernbohrung entlastet werden, wobei ein Teil der Längsnaht, insbesondere deren Übergangsbereich zum Grundwerkstoff, zumindest abschnittsweise entfernt wird.

Nach einer weiteren Ausgestaltung der Tragstruktur ist in Bereichen des Rohrschusses, die den Fügeflächen zugeordnet sind, eine Verdickung der Rohrwandung vorgesehen. Durch die Verdickung im Bereich der bzw. angrenzend an die Fügeflächen kann die Steifigkeit der Tragstruktur insgesamt verbessert werden. Weiter kann die Neigung der Struktur zu Verbeulung bzw. Schalenbeulung vermindert werden.

Zur Steigerung der Stabilität und Steifigkeit der Tragstruktur können Stabilisierungselemente innerhalb der Segmente vorgesehen sein, insbesondere zur Aussteifung der Segmente in radialer Richtung. Die Stabilisierungselemente können beispielsweise als Streben oder Stege ausgeführt sein, die an ihren entgegengesetzten Enden jeweils an der inneren Mantelfläche eines Segments anliegen und das jeweilige Segment in radialer und axialer Richtung aussteifen. Innerhalb eines Segments können in einer Querschnittsebene oder in axialer Richtung verteilt eine Mehrzahl von Streben oder Stabilisierungselemente angeordnet sein, die relativ zueinander einen radialen Versatz aufweisen, und beispielsweise sternförmig überlappend angeordnet sind.

Die Fügeflächen können nach einer weiteren Ausgestaltung der Tragstruktur zumindest abschnittsweise einen Abstand zueinander aufweisen. Der Rohrschuss kann daher nach Art eines offenen Profils, wie eines C-Profils oder dergleichen, geformt sein, wobei die einander zugewandten Fügeflächen beispielsweise einen Abstand von 1 m oder mehr zueinander aufweisen können - insbesondere bei einem Durchmesser des Rohrschusses von 7 m und einer Länge von 3 m.

Alternativ oder ergänzend kann die Tragstruktur einen Rohrschuss umfassen, bei dem die Fügeflächen zumindest abschnittsweise, insbesondere im Wesentlichen vollständig, aneinander anliegen. Mit anderen Worten können die Fügeflächen "auf Stoß" liegen und unmittelbar aneinander angrenzen. In diesem Fall können die Fügeflächen in einfacher Weise mit einer oder mehreren Längsschweißnähten unmittelbar miteinander verbunden werden, wobei die Längsschweißnähte bevorzugt eine geringere Dicke aufweisen können als die Wanddicke des Rohrschusses im Bereich der Fügeflächen. Einander kontaktierende Fügeflächen bieten weiterhin den Vorteil, dass die Rundschweißnaht zu einem angrenzenden Segment ohne Unterbrechung durchgeschweißt werden kann. Insbesondere beim Unterpulverschweißen ist eine durchgehende Schweißnaht vorteilhaft, da die Naht ohne ein Absetzen der Schweißvorrichtung erzeugt werden kann.

Alternativ oder ergänzend kann zwischen den Fügeflächen wenigstens ein Blech angeordnet sein, wobei das Blech insbesondere sich im Wesentlichen in das Rohrinnere auskragend erstreckt und/oder einen im Wesentlichen L-förmigen Querschnitt aufweist. Das Blech kann jeweils mit den Fügeflächen verschweißt sein, so dass die Fügeflächen über das Blech mittelbar miteinander verbunden sind. Beispielsweise können sich im Wesentlichen parallel zueinander erstreckende Längsschweißnähte vorgesehen sein, die das Blech zumindest abschnittsweise zweiseitig einfassen und jeweils mit einer der Fügeflächen verbinden. Das Blech kann zum Halten und Führen von Kabeln, Leitungen oder Rohren und/oder zur Befestigung von Komponenten von Korrosionsschutzsystemen oder Wartungseinrichtungen dienen.

Gemäß einer vorteilhaften Weiterbildung der Tragstruktur ist zwischen den Fügeflächen wenigstens eine Korrosionsschutzeinrichtung angeordnet. Dabei kann es sich um ein aktives kathodisches Korrosionsschutzsystem (AKKS) handeln. Bei einer offenen Profilstruktur mit zueinander beanstandet angeordneten Fügeflächen kann bereits eine (einzelne) zwischen den Fügeflächen angeordnete Korrosionsschutzeinrichtung ausreichend sein, um den Korrosionsschutz sowohl für die innere als auch die äußere Mantelfläche des Rohrschusses zu gewährleisten. Es ist daher nicht erforderlich, sowohl für den Innen- als auch für den Außenbereich separate Opfer- oder Fremdstromanoden an einem jeweiligen Rohrschuss anzubringen, so dass die Anordnung einer oder mehrerer Opfer- und/oder Fremdstromanoden zwischen den Fügeflächen für den Korrosionsschutz der inneren und äußeren Mantelfläche ausreichend ist.

Es kann vorgesehen sein, dass in wenigstens einem Übergangsbereich zwischen einer Fügefläche und einer Stirnfläche des Rohrschusses wenigstens eine Kantenverrundung vorgesehen ist, insbesondere, dass die Schweißverbindung einen der Kantenverrundung zugeordneten Bereich der einander zugewandten Fügeflächen teilweise oder vollständig ausfüllt.

Alternativ oder ergänzend kann vorgesehen sein, dass in wenigstens einem Übergangsbereich zwischen einer Fügefläche und einer inneren und/oder äußeren Mantelfläche des Rohrschusses wenigstens eine Kantenverrundung vorgesehen ist, insbesondere, dass die Schweißverbindung einen der Kantenverrundung zugeordneten Bereich der einander zugewandten Fügeflächen teilweise oder vollständig ausfüllt.

Durch die Kantenverrundung kann die Kerbwirkung im Bereich der Schweißverbindung reduziert und die Festigkeit der Schweißnaht erhöht werden.

Die Kantenverrundung kann in einem Querschnitt oder einem Längsschnitt betrachtet dergestalt sein, dass ein sprungfreier Übergang zwischen einer Fügefläche und einer inneren und/oder äußeren Mantelfläche, oder ein sprungfreier Übergang zwischen einer Fügefläche und einer Stirnfläche des Rohrschusses gebildet ist. "Sprungfrei" bedeutet vorliegend, dass der Übergang beispielsweise tangentenstetig oder krümmungsstetig ausgeführt ist.

Nach einer weiteren Ausgestaltung kann vorgesehen sein, dass die Wanddicke des Rohrschusses in einem an die Fügeflächen angrenzenden Bereich verjüngt ausgeführt ist, insbesondere keilförmig nach Art eine Fase verjüngt ausgeführt ist. Die Verjüngung kann beispielsweise dadurch erreicht werden, dass eine vollständig durchgeschweißte Schweißnaht im Bereich der Fügeflächen nachträglich teilweise abgetragen wird, insbesondere durch Schleifen Strahlen oder dergleichen. Alternativ oder ergänzend kann die Verjüngung bereits vor dem Verschweißen in einem an die Fügeflächen angrenzenden Bereich des Rohrschusses eingebracht worden sein, insbesondere durch Umformen und/oder mechanische Bearbeitung.
Nachfolgend wird die Erfindung anhand einige Ausführungsbeispiele darstellenden Zeichnungen näher beschreiben. Es zeigen jeweils schematisch:
- Fig. 1: eine erfindungsgemäße Tragstruktur in einer perspektivischen Ansicht von oben;
- Fig. 2: die Tragstruktur aus Fig. 1 in einem Querschnitt von oben;
- Fig. 3: eine weitere erfindungsgemäße Tragstruktur in einer Seitenansicht;
- Fig. 4: eine weitere erfindungsgemäße Tragstruktur in einer perspektivischen Ansicht von oben;
- Fig. 5: eine weitere erfindungsgemäße Tragstruktur in einer perspektivischen Ansicht von oben;
- Fig. 6: eine weitere erfindungsgemäße Tragstruktur in einer perspektivischen Ansicht von oben.

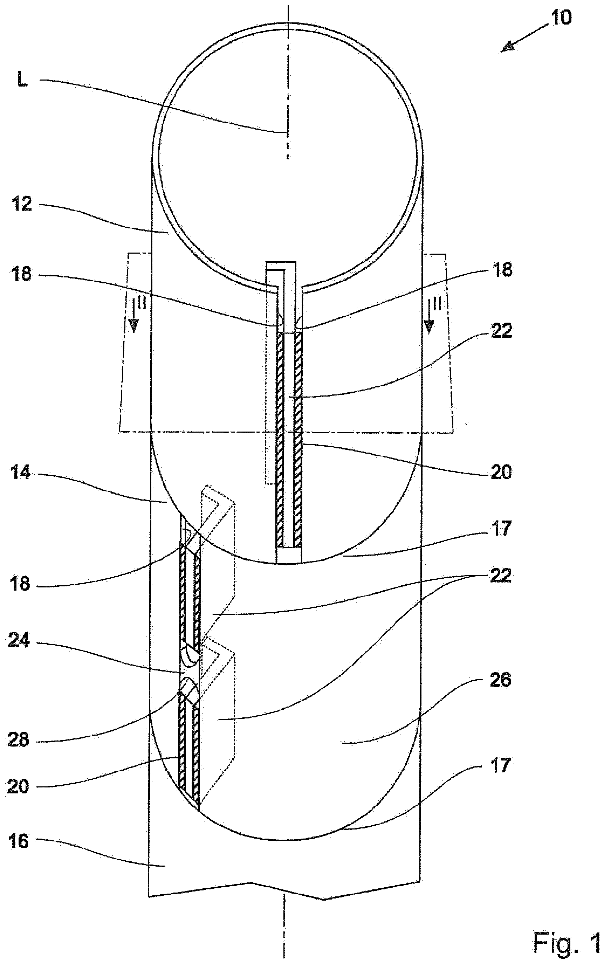

Figur 1 zeigt eine erfindungsgemäße Tragstruktur 10, die aus einer Mehrzahl von Segmenten 12, 14, 16 zusammengesetzt ist, wobei lediglich drei Segmente 12, 14, 16 exemplarisch dargestellt sind.

Die Segmente 12, 14, 16 sind stirnseitig derart miteinander verbunden, dass deren Längsachsen im Wesentlichen kollinear zueinander verlaufen und damit entlang einer gemeinsamen Längsachse L zusammenfallen. Die stirnseitige Verbindung ist durch radiales Verschweißen der Segmente realisiert, so dass die Segmente jeweils über eine Rundschweißnaht 17 miteinander verbunden sind. Dabei können die radialen Schweißnähte 17 stirnseitig über die volle Wanddicke der Segmente 12, 14, 16 durchgeschweißt sein.

Die Segmente 12, 14, 16 sind Rohrschüsse und jeweils aus einem umgeformten Blechzuschnitt hergestellt. In dem hier dargestellten Beispiel beträgt die Blechdicke t der Segmente 12, 14, 16 jeweils ca. 100 mm.

Die Segmente 12, 14 weisen einander zugewandte Fügeflächen 18 auf, die über Schweißverbindungen 20 miteinander verbunden sind. Die Verbindung bzw. Kopplung der Fügeflächen 18 des Segments 12 erfolgt mittelbar über ein zwischen den Fügeflächen angeordnetes Blech 22.

Das Blech 22 ist zweiseitig jeweils über Längsschweißnähte 20 mit den Fügeflächen 18 verbunden. Es weist einen im Wesentlichen L-förmigen Querschnitt auf und ist in das Rohrinnere auskragend erstreckt. Neben dem Blech 22 kann zwischen den Fügeflächen 18 gemäß weiteren Ausführungen der Tragstruktur alternativ oder ergänzend eine Korrosionsschutzeinrichtung (nicht dargestellt) vorgesehen sein.

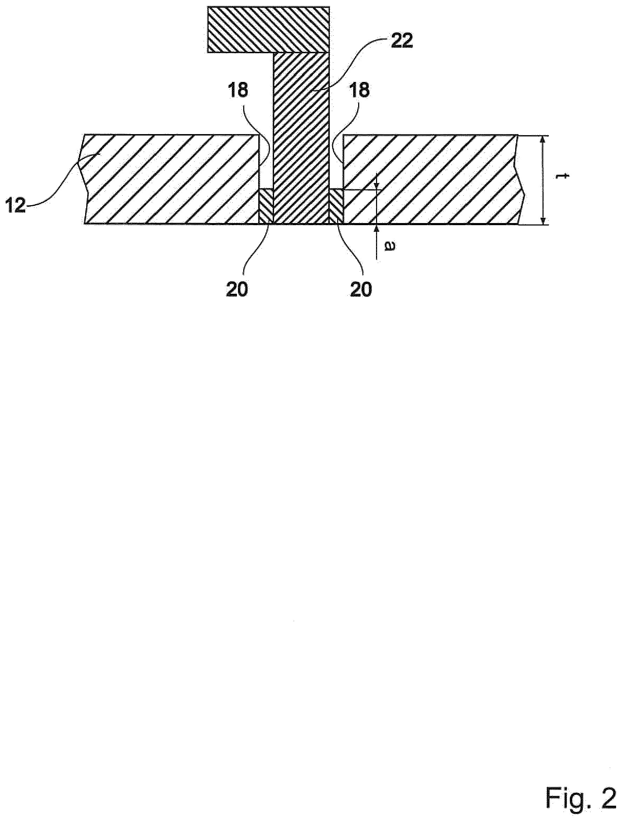

Die jeweilige Dicke a der Schweißnähte 20 beträgt ca. 5 mm und ist damit geringer als die Blechdicke t. Die jeweilige Dicke a der Schweißnähte 20, die Blechdicke t des Segments 12 sowie das Blech 22 sind in Figur 2 in einem Querschnitt entlang der Ebene II dargestellt, wobei die Ebene II orthogonal zur Längsachse L orientiert ist.

Wie aus Figur 2 zu erkennen ist, überdecken die Schweißnähte 20 lediglich einen Teil der jeweils zugeordneten Fügeflächen 18, da die Dicke a der Schweißnähte 20 geringer ist als die Blechdicke t des Rohrschusses 12. Wie eingangs bereits angeführt, ist die Darstellung lediglich schematisch zu verstehen, ohne die tatsächlichen Größenverhältnisse maßstabsgetreu wieder zu geben.

Die Verbindung der Fügeflächen 18 des Segments 14 umfasst ergänzend zu zwei Blechen 22 eine Halteklammer 24, die zwischen den Blechen 22 angeordnet ist (Fig. 1). Die Halteklammer 24 ist zweiseitig von den Fügeflächen 18 eingefasst und schließt bündig zur inneren Mantelfläche (nicht dargestellt) und äußeren Mantelfläche 26 des Segments 14 ab. Die Halteklammer 24 ist mit den Fügeflächen 18 des Segments 14 verschweißt.

Die Halteklammer 24 weist zwei konkave Ausrundungen 28 auf, die im Wesentlichen sprungfrei in die Fügeflächen 18 übergehen, so dass insbesondere keine Stufe bzw. kein Absatz im Übergang von einer Ausrundung 28 hin zur den einander zugewandten Fügeflächen 18 vorgesehen ist. Die Halteklammer 24 weist eine im Wesentlichen bikonkave Form auf.

Durch die bikonkave Form der Halteklammer 24 werden angrenzende bzw. benachbarte Schweißnähte 20 entlastet, so dass insbesondere der Rissbildung im Bereich der Schweißnähte 20 durch Zugspannungen entgegengewirkt werden kann. Weiter kann die Halteklammer 24 als Rissbegrenzer dienen. Beim Versagen einer der Schweißnähte 20 des Segments 14 setzt sich ein Riss demnach nicht über die gesamte Länge des Segments 14 fort, sondern wird im Bereich der Halteklammer 24 unterbrochen.

Vorliegend ist die Halteklammer 24 dauerhaft in die Tragstruktur 10 eingebunden. Gemäß alternativen Ausführungsformen kann eine Halteklammer auch entfernt werden, nachdem die Segmente 12, 14, 16 stirnseitig miteinander verbunden worden sind. Auf diese Weise kann eine größere Durchgangsöffnung geschaffen werden, um Kabel oder andere Anbauteile zu befestigen oder durch die Rohrwandung zu führen, das Gewicht zu reduzieren oder durch eine Wiederverwendung der Halteklammer Kosten zu sparen.

Um die Festigkeit der Schweißnähte 20, insbesondere gegenüber Zugbelastungen, zu steigern, sind durch Kaltumformung Druckeigenspannungen in die Schweißnähte 20 eingebracht worden. Alternativ oder ergänzend können Druckeigenspannungen auch durch Schmieden in die Schweißnähte eingebracht werden.

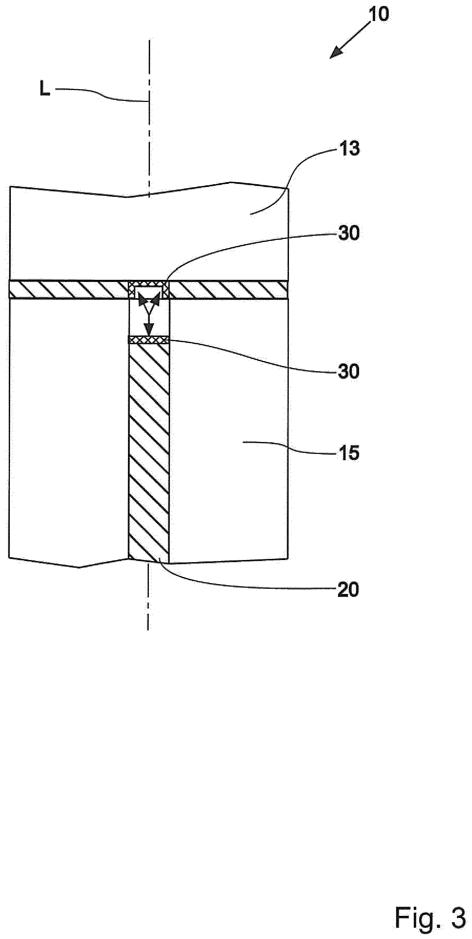

Die Eigenspannungen können sowohl längsseitig als auch stirnseitig in eine Schweißnaht 20 eingebracht werden, wie in Figur 3 exemplarisch für zwei Segmente 13, 15 dargestellt. Eine radiale Schweißnaht 21 kann dabei durchgehend, oder im Bereich der Fügeflächen unterbrochen ausgeführt sein. In den Bereichen 30 ist die Festigkeit der Bauteile durch Kaltverformung gesteigert worden. Die Pfeile deuten jeweils das die Richtung der Kaltverformen der Schweißnähte 20, 21 im Rahmen der stirnseitigen Nachbearbeitung an. Es versteht sich, dass die Schweißnähte 20, 21 zudem über die volle Schweißnahtlänge umfangsseitig bzw. längsseitig durch Kaltverformung und/oder Schmieden nachbearbeitet sein können.

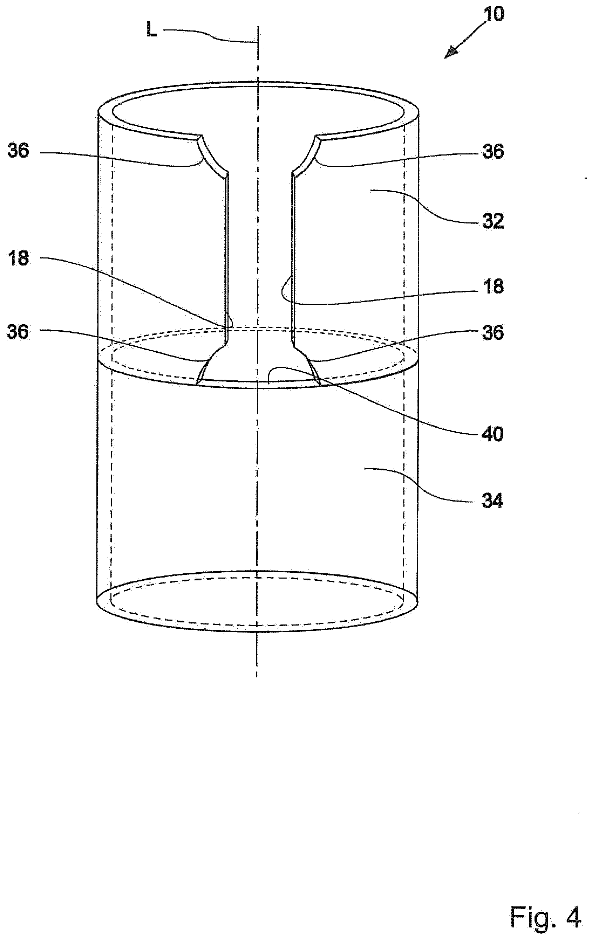

Figur 4 zeigt eine weitere Ausgestaltung einer erfindungsgemäßen Tragstruktur 10, mit einem Rohrschuss 32 und einem Segment 34. Der Rohrschuss 32 weist Aussparungen 36, 38 auf, wobei die Aussparungen 38 von einer Stirnseite 40 des Segments 34 überspannt ist. Die Fügeflächen 18 des Rohrschusses 32 weisen einen Abstand zueinander auf und können beispielsweise nach Art der in Figur 1 und/oder Figur 2 dargestellten Weise miteinander verbunden sein. Zur Veranschaulichung der Aussparungen 36, 38 ist auf die Darstellung der Verbindung der Fügeflächen 18 für das Segment 32 verzichtet worden. Insbesondere können die Fügeflächen 18 in alternativen Ausgestaltungen der Erfindung unmittelbar aneinander anliegen und miteinander verschweißt werden, beispielsweise gemäß Fig. 3, wobei optional die in Fig. 3 gezeigte Nachbearbeitung erfolgen kann.

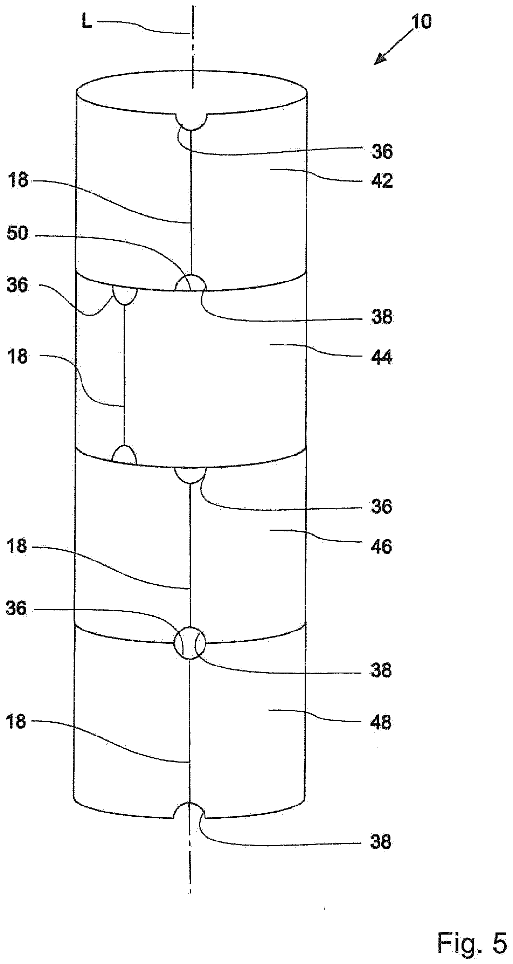

Eine Mehrzahl von Rohrschüssen 42, 44, 46, 48 können zu einer Tragstruktur 10 kombiniert werden (Fig. 5). Jeder der Rohrschüsse 42, 44, 46, 48 kann im Bereich der Fügeflächen 18 nach Art der Figuren 1, 2, 3 oder 4 ausgestaltet sein, wobei in Figur 5 schematisch die Anordnung der Aussparungen 36, 38 dargestellt ist.

Die Aussparungen 36, 38 können vollständig von der Stirnfläche eines benachbarten Segments überspannt sein, so dass z.B. die dem Segment 44 zugeordneten Aussparungen 38 des Segments 42 in axialer Richtung entlang der Achse L betrachtet stirnseitig von der Stirnfläche 50 des Segments 44 begrenzt werden.

Alternativ können die Aussparungen 36, 38 zwei Segmente 46, 48 ohne Winkelversatz zueinander angeordnet sein und ineinander übergehen. Auf diese Weise kann eine vergrößerte Durchgangsöffnung in der Tragstruktur 10 geschaffen werden.

Jedes der Segmente 12, 13, 14, 15, 16, 32, 34, 42, 44, 46, 48 kann mit weiteren Segmenten 12, 13, 14, 15, 16, 32, 34, 42, 44, 46, 48 zu einer Tragstruktur 10 kombiniert werden. Im Bereich der Fügeflächen 18 können die Segmente 12, 13, 14, 15, 16, 32, 34, 42, 44, 46, 48 eine oder mehrere Korrosionsschutzeinrichtungen (nicht dargestellt) aufweisen, wobei insbesondere eine oder mehrere Opfer- und/oder Fremdstromanoden zwischen den Fügeflächen 18 positioniert sein können. Zur Vermeidung von Verbeulung bzw. Schalenbeulung können die Segmente 12, 13, 14, 15, 16, 32, 34, 42, 44, 46, 48 zudem durch Stabilisierungsstreben (nicht dargestellt) in radialer Richtung ausgesteift werden, oder im Bereich der Fügeflächen eine Verdickung der Wanddicke aufweisen.

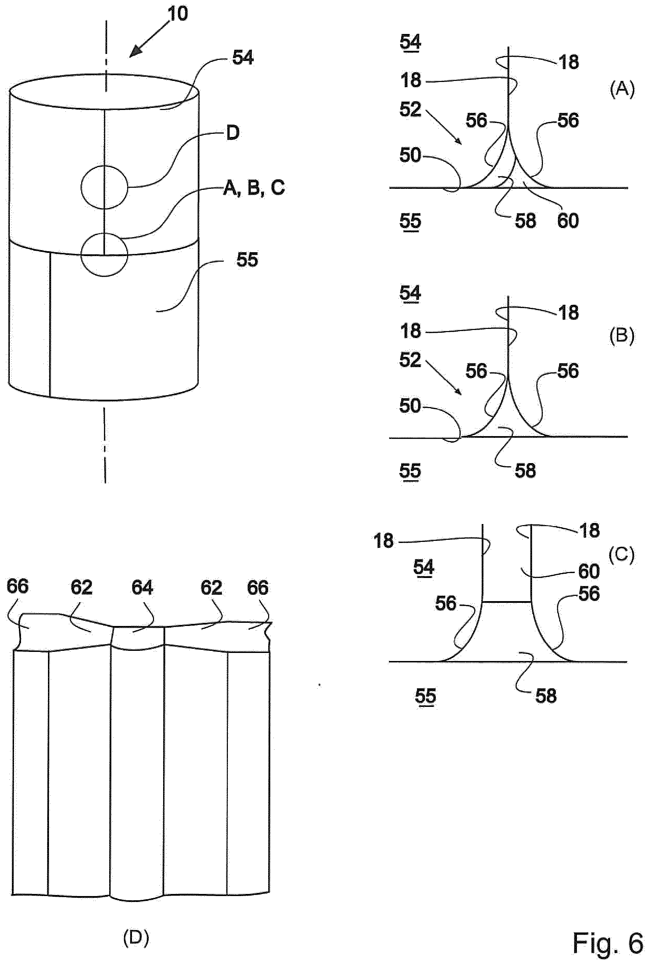

Figur 6 zeigt eine weitere Ausgestaltung einer erfindungsgemäßen Tragstruktur 10. In wenigstens einem Übergangsbereich 52 zwischen einer Fügefläche 18 und einer Stirnfläche 50 eines Rohrschusses 54 ist jeweils eine Kantenverrundung 56 vorgesehen. Die Varianten A, B und C zeigen drei verschiedene Ausgestaltungen einer in diesem Bereich vorgesehenen Schweißverbindung 58.

Gemäß Variante A füllt die Schweißverbindung 58 nur einen Teil eines zwischen den Fügeflächen 18 gebildeten Zwischenraums 60 aus.

Gemäß Variante B füllt die Schweißverbindung 58 den zwischen den Fügeflächen 18 gebildeten Zwischenraum 60 vollständig aus.

Gemäß Variante C überbrückt die Schweißverbindung 58 den zwischen in dieser Variante C beabstandeten Fügeflächen 18 gebildeten Zwischenraum 60 im Bereich der Kantenverrundungen 56. Die Kantenverrundung 56 bildet einen ein sprungfreien Übergang zwischen Fügeflächen 18 und der Stirnfläche 50 des Rohrschusses 54. Ein angrenzender Rohrschuss 55 kann ebenfalls Kantenverrundungen aufweisen.

Im Bereich der Kantenverrundung 56 erstreckt sich die Schweißverbindung 58 über die gesamte Breite der Fügeflächen 18.

Die Wanddicke des Rohrschusses 54 ist in einem an die Fügeflächen 18 angrenzenden Bereich 62 nach Art eine Fase verjüngt ausgeführt, wie der Einzelheit D zu entnehmen ist.

Die Verjüngung 62 ist hier dadurch erzeugt worden, dass eine Schweißnaht 64 im Bereich der Fügeflächen 18 nachträglich teilweise abgetragen worden ist. Die Schweißnaht 64 weist eine geringere Dicke auf, als die Wanddicke des Rohrschusses in einem nicht verjüngten Bereich 66.

### Bezugszeichenliste

- 10: Tragstruktur
- 12, 13, 14, 15,: Segment / Rohrschuss (der Tragstruktur)
- 16, 32, 34, 42,: Segment / Rohrschuss (der Tragstruktur)
- 44, 46, 48, 54, 55: Segment / Rohrschuss (der Tragstruktur)
- 17, 21: radiale Schweißnaht / Rundschweißnaht
- 18: Fügeflächen
- 20: Schweißverbindungen / Längsschweißnähte
- 22: Blech
- 24: Halteklammer
- 26: Mantelfläche
- 28: Ausrundungen
- 30: Bereich der Kaltverformung
- 36, 38: Aussparungen
- 40: Stirnseite des Segments 34
- 50: Stirnfläche
- 52: Übergangsbereich
- 56: Kantenverrundung
- 58: Schweißverbindung
- 60: Zwischenraums 60
- 62: Bereich / Verjüngung / Fase
- 64: Schweißnaht
- a: Dicke Schweißnaht
- t: Blechdicke der Segmente 12, 14, 16
- L: Längsachse (der Tragstruktur und der Segmente / Rohrschüsse)

## Patentansprüche

1. Tragstruktur für eine Windenergieanlage, mit
- zumindest zwei Segmenten (12, 13, 14, 15, 16, 32, 34, 42, 44, 46, 48, 54, 55), die derart mittels einer Rundschweißnaht (17) miteinander verbunden sind, dass deren Längsachsen (L) im Wesentlichen kollinear zueinander verlaufen, wobei
- wenigstens eines der Segmente (12, 13, 14, 15, 16, 32, 34, 42, 44, 46, 48, 54, 55) als Rohrschuss ausgebildet ist, der zwei einander zugewandte, zumindest abschnittsweise miteinander verbundene Fügeflächen (18) aufweist, **dadurch gekennzeichnet, dass**
- die Fügeflächen (18) mittels wenigstens einer Schweißverbindung (20) miteinander verbunden sind, wobei eine Dicke (a) der Schweißverbindung (20) zumindest abschnittsweise geringer ist als eine Wanddicke (t) des Rohrschusses (12, 13, 14, 15, 16, 32, 34, 42, 44, 46, 48, 54, 55).

2. Tragstruktur nach Anspruch 1, **dadurch gekennzeichnet, dass** in die Fügeflächen (18) mittels wenigstens einer Halteklammer (24) miteinander verbunden sind.

3. Tragstruktur nach einem der vorhergehenden Ansprüche, **dadurch gekennzeichnet, dass** in wenigstens einem Übergangsbereich zwischen wenigstens einer der Fügeflächen (18) und einer Stirnfläche des Rohrschusses (12, 13, 14, 15, 16, 32, 34, 42, 44, 46, 48, 54, 55) eine Aussparung (36, 38), insbesondere eine Ausrundung (36, 38), vorgesehen ist.

4. Tragstruktur, insbesondere für eine Windenergieanlage, mit
- zumindest zwei Segmenten (12, 13, 14, 15, 16, 32, 34, 42, 44, 46, 48, 54, 55), die derart miteinander verbunden sind, dass deren Längsachsen (L) im Wesentlichen kollinear zueinander verlaufen, wobei
- wenigstens eines der Segmente (12, 13, 14, 15, 16, 32, 34, 42, 44, 46, 48, 54, 55) als Rohrschuss ausgebildet ist, der zwei einander zugewandte, zumindest abschnittsweise miteinander verbundene Fügeflächen (18) aufweist, wobei
- die Fügeflächen (18) mittels wenigstens einer Halteklammer (24) miteinander verbunden sind, **dadurch gekennzeichnet, dass**
- in wenigstens einem Übergangsbereich zwischen wenigstens einer der Fügeflächen (18) und einer Stirnfläche des Rohrschusses (12, 13, 14, 15, 16, 32, 34, 42, 44, 46, 48, 54, 55) eine Aussparung (36, 38), insbesondere eine Ausrundung (36, 38), vorgesehen ist.

5. Tragstruktur nach Anspruch einem der Ansprüche 2 bis 4, **dadurch gekennzeichnet, dass** die Halteklammer (24)
- zweiseitig von den Fügeflächen (18) eingefasst ist und/oder
- bündig zu der äußeren und/oder inneren Mantelfläche des Rohrschusses (12, 13, 14, 15, 16, 32, 34, 42, 44, 46, 48, 54, 55) abschließt.

6. Tragstruktur nach einem der Ansprüche 2 bis 5, **dadurch gekennzeichnet, dass** die Halteklammer (24)
- wenigstens eine konkave Ausrundung (28) aufweist, wobei die Ausrundung (28) insbesondere im Wesentlichen sprungfrei in die Fügeflächen (18) übergeht, und/oder
- eine im Wesentlichen bikonkave Form aufweist.

7. Tragstruktur nach einem der Ansprüche 3 bis 6, **dadurch gekennzeichnet, dass** wenigstens zwei, insbesondere vier, Aussparungen (36, 38) vorgesehen sind, wobei die Aussparungen (36, 38) insbesondere
- einander gegenüberliegend einer Stirnfläche zugeordnet sind und/oder
- einander abgewandt entgegengesetzten Stirnflächen zugeordnet sind.

8. Tragstruktur nach einem der Ansprüche 3 bis 7, **dadurch gekennzeichnet, dass**
- wenigstens eine Aussparung (36, 38) zumindest abschnittsweise, insbesondere vollständig, von einer Stirnfläche (40) eines benachbarten Segments (12, 13, 14, 15, 16, 32, 34, 42, 44, 46, 48, 54, 55) überspannt ist und/oder
- wenigstens eine Aussparung (36, 28) zumindest abschnittsweise in eine Aussparung (36, 38) eines benachbarten Segments (12, 13, 14, 15, 16, 32, 34, 42, 44, 46, 48, 54, 55) übergeht und/oder
- wenigstens zwei Aussparungen (36, 38) zweier benachbarter Segmente (12, 13, 14, 15, 16, 32, 34, 42, 44, 46, 48, 54, 55) umfangsseitig unter einem Winkelversatz zueinander angeordnet sind.

9. Tragstruktur nach einem der vorhergehenden Ansprüche, **dadurch gekennzeichnet, dass**
- die Schweißverbindung (20, 21) in einem Dickenquerschnitt Druckeigenspannungen aufweist, wobei die Druckeigenspannungen insbesondere durch Kaltverformen und/oder Schmieden erzeugt worden sind
und/oder
- die Schweißverbindung durch Aufbohren entlastet worden ist.

10. Tragstruktur nach einem der vorhergehenden Ansprüche, **dadurch gekennzeichnet, dass** in Bereichen des Rohrschusses (12, 13, 14, 15, 16, 32, 34, 42, 44, 46, 48, 54, 55), die den Fügeflächen (18) zugeordnet sind, zumindest abschnittsweise eine Verdickung der Rohrwandung vorgesehen ist.

11. Tragstruktur nach einem der vorhergehenden Ansprüche, **dadurch gekennzeichnet, dass**
- die Fügeflächen (18) zumindest abschnittsweise einen Abstand zueinander aufweisen und/oder aneinander anliegen und/oder
- zwischen den Fügeflächen (18) wenigstens ein Blech (22) angeordnet ist, wobei das Blech (22) insbesondere
- sich im Wesentlichen in das Rohrinnere auskragend erstreckt und/oder
- einen im Wesentlichen L-förmigen Querschnitt aufweist.

12. Tragstruktur nach einem der vorhergehenden Ansprüche, **dadurch gekennzeichnet, dass** zwischen den Fügeflächen (18) wenigstens eine Korrosionsschutzeinrichtung angeordnet ist.

13. Tragstruktur nach einem der vorhergehenden Ansprüche, **dadurch gekennzeichnet, dass**
- in wenigstens einem Übergangsbereich (52) zwischen einer Fügefläche (18) und einer Stirnfläche (50) des Rohrschusses (12, 13, 14, 15, 16, 32, 34, 42, 44, 46, 48, 54, 55) wenigstens eine Kantenverrundung (56) vorgesehen ist, insbesondere, dass die Schweißverbindung (20, 64) einen der Kantenverrundung (56) zugeordneten Bereich (60) der einander zugewandten Fügeflächen (18) teilweise oder vollständig ausfüllt,
und/oder
- in wenigstens einem Übergangsbereich zwischen einer Fügefläche (18) und einer inneren und/oder äußeren Mantelfläche des Rohrschusses (12, 13, 14, 15, 16, 32, 34, 42, 44, 46, 48, 54, 55) wenigstens eine Kantenverrundung vorgesehen ist, insbesondere, dass die Schweißverbindung (20) einen der Kantenverrundung zugeordneten Bereich der einander zugewandten Fügeflächen teilweise oder vollständig ausfüllt.

14. Tragstruktur nach einem der vorhergehenden Ansprüche, **dadurch gekennzeichnet, dass**
- die Wanddicke (t) des Rohrschusses (12, 13, 14, 15, 16, 32, 34, 42, 44, 46, 48, 54, 5)) in einem an die Fügeflächen (18) angrenzenden Bereich (62) verjüngt ausgeführt ist, insbesondere keilförmig nach Art eine Fase verjüngt ausgeführt ist.

## Claims

1. A support structure for a wind turbine, comprising
- at least two segments (12, 13, 14, 15, 16, 32, 34, 42, 44, 46, 48, 54, 55) which are connected to one another by means of a circular weld seam (17) in such a manner that the longitudinal axes (L) thereof run substantially collinearly to one another, wherein
- at least one of the segments (12, 13, 14, 15, 16, 32, 34, 42, 44, 46, 48, 54, 55) is designed as a cylindrical pipe section which has at least two mutually facing joining surfaces (18) which are connected to one another at least in sections,
**characterized in that**
- the joining surfaces (18) are connected to one another by means of at least one welded joint (20), wherein a thickness (a) of the welded joint (20) is smaller at least in sections than a wall thickness (t) of the pipe section (12, 13, 14, 15, 16, 32, 34, 42, 44, 46, 48, 54, 55).

2. The support structure as claimed in claim 1, **characterized in that** the joining surfaces (18) are connected to one another by means of at least one holding clamp (24).

3. The support structure as claimed in one of the preceding claims, **characterized in that** a recess (36, 38), in particular a rounded portion (36, 38), is provided in at least one transition region between at least one of the joining surfaces (18) and an end surface of the pipe section (12, 13, 14, 15, 16, 32, 34, 42, 44, 46, 48, 54, 55).

4. A support structure particularly for a wind turbine, comprising
- at least two segments (12, 13, 14, 15, 16, 32, 34, 42, 44, 46, 48, 54, 55) which are connected to one another in such a manner that the longitudinal axes (L) thereof run substantially collinearly to one another, wherein
- at least one of the segments (12, 13, 14, 15, 16, 32, 34, 42, 44, 46, 48, 54, 55) is designed as a cylindrical pipe section which has at least two mutually facing joining surfaces (18) which are connected to one another at least in sections, wherein
- the joining surfaces (18) are connected to one another by means of at least one holding clamp (24)
**characterized in that**
- in at least one transition region between at least one of the joining surfaces (18) and an end face of the pipe section(12, 13, 14, 15, 16, 32, 34, 42, 44, 46, 48, 54,55) a recess (36, 38), in particular a fillet (36, 38), is provided.

5. The support structure as claimed in one of the claims 2 to 4, **characterized in that** the holding clamp (24)
- is enclosed on two sides by the joining surfaces (18), and/or
- ends flush with the outer and/or inner casing surface of the pipe section (12, 13, 14, 15, 16, 32, 34, 42, 44, 46, 48, 54, 55).

6. The support structure as claimed in one of the claims 2 to 5, **characterized in that** the holding clamp (24)
- has at least one concave rounded portion (28), wherein the rounded portion (28) in particular merges substantially smoothly into the joining surfaces (18), and/or
- has a substantially biconcave shape.

7. The support structure as claimed in one of the claims 3 to 6, **characterized in that** at least two, in particular four, recesses (36, 38) are provided, wherein the recesses (36, 38) in particular
- are assigned to an end surface lying opposite each other, and/or
- are assigned to opposite end surfaces facing away from each other.

8. The support structure as claimed in in one of the claims 3 to 7, **characterized in that**
- at least one recess (36, 38) is spanned at least in sections, in particular completely, by an end surface (40) of an adjacent segment (12, 13, 14, 15, 16, 32, 34, 42, 44, 46, 48, 54, 55), and/or
- at least one recess (36, 28) merges at least in sections into a recess (36, 38) of an adjacent segment (12, 13, 14, 15, 16, 32, 34, 42, 44, 46, 48, 54, 55), and/or
- at least two recesses (36, 38) of two adjacent segments (12, 13, 14, 15, 16, 32, 34, 42, 44, 46, 48, 54, 55) are arranged circumferentially at an angular offset with respect to one another.

9. The support structure as claimed in one of the preceding claims, **characterized in that**
- the welded joint (20, 21) has residual compressive stresses in a thickness cross section, wherein the residual compressive stresses have been produced in particular by cold forming and/or forging, and/or
- the welded joint has been relieved of load by a hole being drilled therein.

10. The support structure as claimed in one of the preceding claims, **characterized in that** a thickening of the pipe wall is provided at least in sections in regions of the pipe section (12, 13, 14, 15, 16, 32, 34, 42, 44, 46, 48, 54, 55) that are assigned to the joining surfaces (18).

11. The support structure as claimed in one of the preceding claims, **characterized in that**
- the joining surfaces (18) are at a distance from one another and/or lie against one another at least in sections, and/or
- at least one metal sheet (22) is arranged between the joining surfaces (18), wherein the metal sheet (22) in particular
- extends in a substantially projecting manner into the pipe interior, and/or
- has a substantially L-shaped cross section.

12. The support structure as claimed in one of the preceding claims, **characterized in that** at least one corrosion protection device is arranged between the joining surfaces (18).

13. The support structure as claimed in one of the preceding claims, **characterized in that**
- at least one edge rounding (56) is provided in at least one transition region (52) between a joining surface (18) and an end surface (50) of the pipe section (12, 13, 14, 15, 16, 32, 34, 42, 44, 46, 48, 54, 55), in particular **in that** the welded joint (20, 64) partially or completely fills a region (60), which is assigned to the edge rounding (56), of the mutually facing joining surfaces (18), and/or
- at least one edge rounding is provided in at least one transition region between a joining surface (18) and an inner and/or outer casing surface of the pipe section (12, 13, 14, 15, 16, 32, 34, 42, 44, 46, 48, 54, 55), in particular **in that** the welded joint (20) partially or completely fills a region, which is assigned to the edge rounding, of the mutually facing joining surfaces.

14. The support structure as claimed in one of the preceding claims, **characterized in that**
- the wall thickness (t) of the pipe section (12, 13, 14, 15, 16, 32, 34, 42, 44, 46, 48, 54, 5) is formed in a tapered manner in a region (62) adjacent to the joining surfaces (18), in particular is formed in a tapered manner in a wedge shape in the manner of a bevel.

## Revendications

1. Structure de support destinée à une éolienne, la structure de support comprenant
- au moins deux segments (12, 13, 14, 15, 16, 32, 34, 42, 44, 46, 48, 54, 55) qui sont reliés entre eux par un cordon de soudure circonférentielle (17) de telle sorte que leurs axes longitudinaux (L) s'étendent de manière sensiblement colinéaire l'un à l'autre,
- l'un au moins des segments (12, 13, 14, 15, 16, 32, 34, 42, 44, 46, 48, 54, 55) étant conçu comme un tronçon de tube qui comporte deux surfaces de jonction (18) se faisant face et reliées au moins en partie l'une à l'autre,
**caractérisée en ce que**
- les surfaces de jonction (18) sont reliées l'une à l'autre au moyen d'au moins une liaison soudée (20), l'épaisseur (a) de la liaison soudée (20) étant au moins en partie inférieure à l'épaisseur de paroi (t) du tronçon de tube (12, 13, 14, 15, 16, 32, 34, 42, 44, 46, 48, 54, 55).

2. Structure de support selon la revendication 1, **caractérisée en ce que**
les surfaces de jonction (18) sont reliées entre elles au moyen d'au moins une attache de retenue (24).

3. Structure de support selon l'une des revendications précédentes, **caractérisée en ce qu'**un évidement (36, 38), en particulier un congé (36, 38), est ménagé dans au moins une région de transition située entre l'une au moins des surfaces de jonction (18) et une face frontale du tronçon de tube (12, 13, 14, 15, 16, 32, 34, 42, 44, 46 , 48, 54, 55).

4. Structure de support, destinée en particulier à une éolienne, la structure de support comprenant au moins deux segments (12, 13, 14, 15, 16, 32, 34, 42, 44, 46, 48, 54, 55) qui sont reliés entre eux de telle sorte que leurs axes longitudinaux (L) s'étendent de manière sensiblement colinéaire l'un à l'autre,
- l'un au moins des segments (12, 13, 14, 15, 16, 32, 34, 42, 44, 46, 48, 54, 55) étant conçu comme un tronçon de tube qui comporte deux surfaces de jonction (18) se faisant face et reliées au moins en partie l'une à l'autre,
- les surfaces de jonction (18) étant reliées entre elles au moyen d'au moins une attache de retenue (24), **caractérisée en ce que**
- un évidement (36, 38), notamment un congé (36, 38) est prévu dans au moins une région de transition située entre l'une au moins des surfaces de jonction (18) et une face d'extrémité du tronçon de tube (12, 13, 14, 15, 16, 32, 34, 42, 44, 46, 48, 54, 55).

5. Structure de support selon la revendication 2 à 4, **caractérisée en ce que** l'attache de retenue (24)
- est bordée des deux côtés par les surfaces de jonction (18) et/ou
- se termine à fleur de la surface d'enveloppe extérieure et/ou intérieure du tronçon de tube (12, 13, 14), 15, 16, 32, 34, 42, 44, 46, 48, 54, 55).

6. Structure de support selon l'une des revendications 2 à 5, **caractérisée en ce que** l'attache de retenue (24)
- comporte au moins un congé concave (28), le congé (28) se fondant notamment sensiblement sans saut dans les surfaces de jonction (18), et/ou
- a une forme sensiblement biconcave.

7. Structure de support selon l'une des revendications 3 à 6, **caractérisée en ce qu'**au moins deux, en particulier quatre, évidements (36, 38) sont prévus, les évidements (36, 38) étant associés en particulier
- l'un à l'autre en face d'une face frontale et/ou
- à des faces frontales opposées l'une à l'autre.

8. Structure de support selon l'une des revendications 3 à 7, **caractérisée en ce que**
- au moins un évidement (36, 38) est recouvert au moins en partie, en particulier complètement, par une face frontale (40) d'un segment adjacent (12, 13, 14, 15, 16, 32, 34, 42, 44, 46, 48, 54, 55) et/ou
- au moins un évidement (36, 28) se fond au moins en partie dans un évidement (36, 38) d'un segment adjacent (12, 13, 14, 15, 16, 32, 34, 42, 44, 46, 48, 54, 55) et / ou
- au moins deux évidements (36, 38) de deux segments adjacents (12, 13, 14, 15, 16, 32, 34, 42, 44, 46, 48, 54, 55) sont disposés circonférentiellement avec un décalage angulaire l'un par rapport à l'autre.

9. Structure de support selon l'une des revendications précédentes, **caractérisée en ce que**
- la liaison soudée (20, 21) comporte des contraintes de compression résiduelles dans une section transversale d'épaisseur, les contraintes de compression résiduelles ayant été générées notamment par forgeage et/ou par formage à froid et/ou
- la liaison soudée a été soulagée par perçage.

10. Structure de support selon l'une des revendications précédentes, **caractérisée en ce qu'**un épaississement de la paroi de tube est au moins en partie prévu dans des zones du tronçon de tube (12, 13, 14, 15, 16, 32, 34, 42, 44, 46, 48, 54, 55), qui sont associées aux surfaces de jonction (18).

11. Structure de support selon l'une des revendications précédentes, **caractérisée en ce que**
- les surfaces de jonction (18) présentent au moins en partie une distance entre elles et/ou viennent en appui l'une contre l'autre et/ou
- au moins une tôle (22) est disposée entre les surfaces de jonction (18), en particulier la tôle (22)
- s'étendant de manière sensiblement saillante à l'intérieur du tube et/ou
- ayant une section transversale sensiblement en forme de L.

12. Structure de support selon l'une des revendications précédentes, **caractérisée en ce qu'**au moins un dispositif anticorrosion est disposé entre les surfaces de jonction (18).

13. Structure de support selon l'une des revendications précédentes, **caractérisée en ce que**
- au moins un arrondi de bord (56) est prévu dans au moins une région de transition (52) située entre une surface de jonction (18) et une face frontale (50) du tronçon de tube (12, 13, 14, 15, 16, 32, 34, 42, 44, 46, 48, 54, 55), notamment de sorte que la liaison soudée (20, 64) remplisse partiellement ou complètement une région (60), associée à l'arrondi de bord (56), des surfaces de jonction (18) se faisant face, et/ou
- au moins un arrondi de bord est prévu dans au moins une région de transition située entre une surface de jonction (18) et une surface d'enveloppe intérieure et/ou extérieure du tronçon de tube (12, 13, 14, 15, 16, 32, 34, 42, 44, 46, 48, 54, 55), en particulier de sorte que la liaison soudée (20) remplisse partiellement ou complètement une région, associée à l'arrondi de bord, des surfaces de jonction se faisant face.

14. Structure de support selon l'une des revendications précédentes, **caractérisée en ce que**
- l'épaisseur de paroi (t) du tronçon de tube (12, 13, 14, 15, 16, 32, 34, 42, 44, 46, 48, 54, 5) est prévue pour se rétrécir dans une région (62) adjacente aux surfaces de jonction (18), notamment en forme de coin à la manière d'un chanfrein.
